# EUROPEAN PATENT APPLICATION

(11) **EP 4 411 008 A1**
(43) Date of publication of application: **07.08.2024**
(21) Application number: 22876026.0
(22) Date of filing: 22.09.2022
(51) Int. Cl.: C22B 23/00, C22B 3/06, C22B 3/44, C22B 3/46, C22B 7/00, C22B 15/00, H01M 10/54

(54) **ALLOY TREATMENT METHOD**

(30) Priority: 29.09.2021 JP 2021159725; 29.09.2021 JP 2021159496; 08.11.2021 JP 2021181784; 08.11.2021 JP 2021181931; 31.08.2022 JP 2022138375
(71) Applicant: SUMITOMO METAL MINING CO., LTD., Tokyo 105-8716 (JP)
(72) Inventor: TAKENOUCHI Hiroshi, Niihama-shi, Ehime 792-0002 (JP); SHOUJI Hirofumi, Niihama-shi, Ehime 792-0002 (JP); MATSUOKA Itsumi, Niihama-shi, Ehime 792-0002 (JP); MATSUGI Takumi, Niihama-shi, Ehime 792-0002 (JP); SANJO Shota, Niihama-shi, Ehime 792-0002 (JP); ASANO Satoshi, Niihama-shi, Ehime 792-0002 (JP); HEGURI Shin-ichi, Niihama-shi, Ehime 792-0002 (JP)
(74) Representative: Jones, Nicholas Andrew
(86) International application number: PCT/JP2022/035340
(87) International publication number: WO 2023/054159

(57) **Abstract**

Provided is a method for efficiently obtaining a solution containing nickel and/or cobalt from alloys containing nickel and/or cobalt and copper, such as waste lithium-ion batteries. The present invention pertains to an alloy treatment method for obtaining a solution containing nickel and/or cobalt from alloys containing nickel and/or cobalt and copper, the method comprising: a leaching step S1 in which an acid solution is added to the alloys in the presence of a sulfurizing agent to perform a leaching treatment and obtain a leachate and a leaching residue; and a cementation step S2 in which a reducing agent and a sulfurizing agent are added to the resulting leachate to perform a copper-removal treatment for sulfurizing at least copper contained in the leachate and obtain a post-copper removal solution and a copper-removed residue, wherein the copper-removed residue obtained through the copper-removal treatment in the cementation step S2 is repeatedly subjected to the leaching step S1 and subjected to a leaching treatment together with the alloys.

## Description

### TECHNICAL FIELD

The present invention relates to an alloy processing method for producing a solution containing nickel and/or cobalt from an alloy including nickel and/or cobalt and copper.

### BACKGROUND ART

Lithium ion batteries (hereinafter also referred to as "LIBs"), which have lightweight and high power characteristics, are installed in vehicles, such as electric automobiles and hybrid automobiles, and in electronic devices, such as cell phones, smartphones, and personal computers.

An LIB has a structure where an outer case made of a metal, such as aluminum or iron, or a plastic, such as polyvinyl chloride houses: a negative electrode material including a copper foil as a negative current collector and a negative electrode active material, such as graphite, bonded to the surface of the negative electrode current collector; a positive electrode material including an aluminum foil as a positive electrode current collector and a positive electrode active material, such as lithium nickelate or lithium cobaltate, bonded to the surface of the positive electrode current collector; and a separator made of a porous resin film, such as a porous polypropylene film, the negative and positive electrode materials and the separator being impregnated with an organic solvent including an electrolyte, such as lithium hexafluorophosphate (LiPF₆), as an electrolytic solution.

After operating for a certain period in vehicles or electronic devices as mentioned above, LIBs will no longer be able to operate due to the degradation of the vehicles or electronic devices or the end of their own lifetime, which will result in discarded lithium ion batteries (discarded LIBs). Discarded LIBs also include defective products occurring in the LIB manufacturing process.

These discarded LIBs contain valuable components, such as nickel, cobalt, and copper, which are desired to be recovered and reused for economical use of resources.

Generally, in order to efficiently recover valuable components from devices, parts, or other materials formed of metals, a pyrometallurgical process is conventionally and widely performed; the pyrometallurgical process uses the principle of pyrometallurgy and includes introducing the devices, etc. into a furnace for melting at high temperature; and separating a metallic material including the valuable components from a slag other than the metallic material. For example, Patent Document 1 discloses a method of recovering valuable metals using a pyrometallurgical process. The method disclosed in Patent Document 1 can be used for recovering valuable metals from discarded LIBs so that copper alloys containing nickel and cobalt can be obtained.

Such a pyrometallurgical process (hereinafter also referred to as "dry process") advantageously enables a variety of impurities to be separated at a time, although it is disadvantageously energy-consuming since it uses a furnace for heating at high temperatures. Such a pyrometallurgical process is also advantageous in that the resulting slag is chemically stable, less likely to have an impact on the environment, and easy to dispose of.

However, such a pyrometallurgical process has a problem in that when it is used for treating discarded LIBs, some of the valuable components (in particular, cobalt) are almost entirely distributed into the slag, which means an unavoidable loss in cobalt recovery. Moreover, the metallic material resulting from the pyrometallurgical process is an alloy including coexisting valuable components, which needs to be subjected to refining and impurity removal such that the coexisting valuable components can be individually separated from the alloy and reused.

A method commonly used for separating elements in the pyrometallurgical process includes gradually cooling a high-temperature molten material to separate, for example, copper and lead or lead and zinc. However, when copper and nickel are main components, such as those in discarded LIBs, they will uniformly melt together in all composition ranges, which means that the gradual cooling will convert them into only a mixed layered solid and not allow copper and nickel to be separated from each other.

Another refining method includes allowing nickel to undergo a disproportionation reaction with carbon monoxide (CO) to volatilize and separate the product from copper and cobalt. Unfortunately, such a method has a problem in that the use of the toxic CO gas makes it difficult to ensure safety.

Another method used industrially to separate copper and nickel includes roughly separating a mixture of mattes (sulfides). This method includes performing a smelting process to produce mattes containing copper and nickel; and gradually cooling the mattes in a way similar to that mentioned above, to separate a copper-rich sulfide and a nickel-rich sulfide. Unfortunately, this separation method can only roughly separate copper and nickel and needs an additional process, such as electrolytic refining, when nickel and copper should be obtained at high purity.

Other methods have also been studied that include producing chlorides and separating the chlorides based on their difference in vapor pressure. However, such methods involve the process of handling a large amount of toxic chlorine and thus need extensive measures to prevent equipment corrosion and to ensure safety, which is hardly considered suitable for industrial use.

Thus, the pyrometallurgical process for separation and purification of each element has the disadvantage of being limited to a crude separation level or being expensive.

In contrast, the hydrometallurgical process (hereinafter also referred to as "wet process"), which is based on a hydrometallurgical smelting method and includes an acid treatment, neutralization, solvent extraction, and other methods, is advantageous in that it is less energy-consuming and able to separate individual valuable components from a mixture and to recover the individual valuable components at a high purity grade.

Unfortunately, when the hydrometallurgical process is used for the treatment of discarded LIBs, hexafluorophosphate anions (an electrolyte component of discarded LIBs) will mix into an acid solution containing the leached valuable components, since the hexafluorophosphate is a hard-to-treat substance that cannot be completely decomposed even with sulfuric acid at high concentration and high temperature. Hexafluorophosphate anions are a water-soluble carbonate ester, which means that it is difficult to recover phosphorus and fluorine from the aqueous solution obtained after the recovery of the valuable components and that there are many environmental restrictions, such as the need to take a variety of measures to reduce the emission of such substances into public marine areas and other areas.

It is also not easy to efficiently leach valuable components from discarded LIBs using only an acid to obtain a solution that is ready to be subjected to refining. In particular, the main body of the discarded LIB is resistant to acid leaching and it is not easy to completely leach the valuable components from the discarded LIB. If a strongly oxidizing acid is used to perform aggressive leaching, not only the valuable components but also impurity components, such as aluminum, iron, and manganese, not intended to be recovered industrially, can be leached, which will cause problems, such as the need to treat the impurities by neutralization and other processes, an additional cost for the neutralizing agent, and an increase in the amount of discharged water or the amount of sediments. Furthermore, discarded LIBs may still have a residual charge. Thus, a time-consuming process for releasing the residual charge is necessary since the risk of heat or explosion may remain if the LIBs are treated without any modification.

Thus, using only the hydrometallurgical process to treat discarded LIBs is not always considered an advantageous way.

Under such circumstances, attempts have been made to treat discarded LIBs, which are difficult to treat completely by the pyrometallurgical or hydrometallurgical process alone, by a combination of pyrometallurgical and hydrometallurgical processes, which specifically includes performing a pyrometallurgical process, including the roasting of the discarded LIBs, to remove impurities as much as possible and to produce a homogeneous processed material from the discarded LIBs; and subjecting the processed material to a hydrometallurgical process to separate valuable components from other components.

In the combination of pyrometallurgical and hydrometallurgical processes, fluorine and phosphorus derived from the electrolytic solution can be volatilized and removed by the pyrometallurgical process, while organic components, such as plastics and separators (structural components of the discarded LIBs), can be decomposed by heat. The processed material produced from the discarded LIBs by the pyrometallurgical process is in a homogeneous state and thus provides a homogeneous starting material easy to handle for the hydrometallurgical process.

However, only a simple combination of pyrometallurgical and hydrometallurgical processes still has the problem of recovery loss whereby cobalt contained in the discarded LIBs is distributed into the slag.

For example, a method is also possible where the treatment conditions for the pyrometallurgical process are controlled so that cobalt is distributed not into the slag but into the metal and reductive melting is performed so that the distribution of cobalt into the slag is decreased. However, such a method will produce a sparingly soluble corrosion-resistant alloy that is nickel and cobalt-containing copper-based alloy. Since such a corrosion-resistant alloy is hardly soluble in an acid, it will be not possible for the hydrometallurgical process to effectively recover valuable components from the corrosion-resistant alloy.

For example, chlorine gas may be used for the leaching of the corrosion-resistant alloy. In such a case, a solution (leachate) can be obtained which contains a high concentration of copper and relatively low concentrations of nickel and cobalt. From such a solution, nickel and cobalt can be easily separated by a known method, such as solvent extraction, but specifically, it is difficult to achieve easy and low-cost separation of copper from nickel and cobalt.

As described above, it was difficult to efficiently separate copper and nickel and/or cobalt from an alloy derived from discarded LIBs containing various components in addition to copper, nickel, and cobalt, which are valuable components.

The problem described above can also occur when nickel and/or cobalt and copper are separated from discarded batteries other than discarded LIBs and when nickel and/or cobalt and copper are separated from alloys derived from materials other than discarded batteries.

### Citation List

### Patent Document

Patent Document 1: Japanese Unexamined Patent Application, Publication No. 2012-172169
Patent Document 2: Japanese Unexamined Patent Application, Publication No. S63-259033

### DISCLOSURE OF THE INVENTION

### Problems to be Solved by the Invention

The present invention has been proposed in light of the above-described circumstances and it is an object of the present invention to provide a method for efficiently obtaining a solution containing nickel and/or cobalt from an alloy containing nickel and/or cobalt and copper, such as a discarded lithium ion battery.

### Means for Solving the Problems

As a result of extensive investigations, the present inventors have found that the above-mentioned problems can be solved by a processing method including a leaching step of leaching an alloy with an acid and a cementation step of performing a copper-removal treatment on the obtained leachate, the method including feeding a copper-removed residue obtained through the copper-removal treatment back to the leaching step to subject the copper-removed residue to the leaching treatment together with an alloy as a raw material to be processed, arriving at the completion of the present invention.

(1) A first invention of the present invention relates to an alloy processing method for obtaining a solution containing nickel and/or cobalt from an alloy containing nickel and/or cobalt and copper, the method including: a leaching step of performing a leaching treatment by adding an acid solution to the alloy in the presence of a sulfurizing agent to obtain a leachate and a leaching residue; and a cementation step of performing a copper-removal treatment by adding a reducing agent and a sulfurizing agent to the leachate obtained in the leaching step to sulfurize copper contained at least in the leachate to obtain a post-copper-removal solution and a copper-removed residue; in which the copper-removed residue obtained through the copper-removal treatment in the cementation step is fed back to the leaching step to subject the copper-removed residue to the leaching treatment together with the alloy.
(2) A second invention of the present invention relates to the alloy processing method as described in the first invention, in which the copper-removed residue obtained through the copper-removal treatment in the cementation step is separated and recovered and formed into a slurry and the slurry is fed back to the leaching step within 1.5 hours from the slurry formation to subject the copper-removed residue to the leaching treatment together with the alloy.
(3) A third invention of the present invention relates to the alloy processing method as described in the first invention, in which the copper-removed residue obtained through the copper-removal treatment in the cementation step is formed into a slurry and the copper-removed residue is fed back to the leaching step to be subjected to the leaching treatment together with the alloy, while maintaining the pH of the slurry of the copper-removed residue at 3 or less.
(4) A fourth invention of the present invention relates to the alloy processing method as described in any one of the first to third inventions, in which in the cementation step, the addition amount of the sulfurizing agent is set to less than 1 equivalent with respect to copper contained in the leachate.
(5) A fifth invention of the present invention relates to the alloy processing method as described in any one of the first to fourth inventions, in which in the cementation step, the alloy containing nickel and/or cobalt and copper is used as the reducing agent.
(6) A sixth invention of the present invention relates to the alloy processing method as described in the fifth invention, in which the alloy remains in the copper-removed residue to be fed back to the leaching step.
(7) A seventh aspect of the present invention relates to the alloy processing method as described in the fifth invention, in which in the cementation step, the addition amount of the sulfurizing agent is set to less than 1 equivalent with respect to copper contained in the leachate and the alloy to be used as the reducing agent.
(8) An eighth invention of the present invention relates to the alloy processing method as described in the fifth invention, in which the amount of the alloy added as the reducing agent in the cementation step is in the range of 1.0 times or more and 2.0 times or less the equivalent required to sulfurize copper contained in the leachate to precipitate as copper sulfide.
(9) A ninth invention of the present invention relates to the alloy processing method as described in any one of the first to eighth inventions, in which the alloy includes an alloy obtained by melting a discarded battery of a lithium ion battery.

### Effects of the Invention

According to the present invention, it is possible to selectively obtain a solution containing nickel and/or cobalt from an alloy including nickel and/or cobalt and copper, such as a discarded lithium ion battery.

### BRIEF DESCRIPTION OF THE DRAWINGS

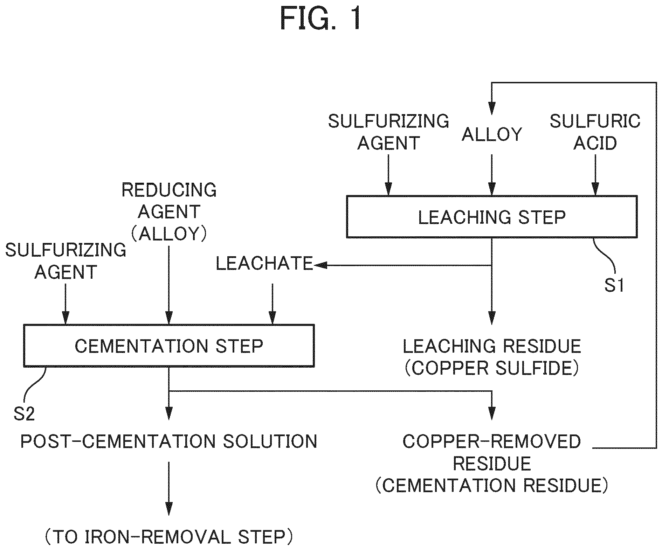

FIG. 1 is a process diagram showing an example of a flow of the alloy processing method.

### PREFERRED MODE FOR CARRYING OUT THE INVENTION

Hereinafter, specific embodiments of the present invention (hereinafter referred to as "embodiments") will be described in detail. It should be noted that the embodiments are not intended to limit the present invention and may be appropriately altered or modified for implementation without departing from the gist of the present invention. As used herein, the expression "X to Y", in which X and Y each represent any numerical value, is intended to mean "X or more and Y or less".

An alloy processing method according to the present embodiment is an alloy processing method for producing a solution containing nickel and/or cobalt from an alloy including nickel and/or cobalt and copper.

The alloy including nickel and/or cobalt and copper, which is a target to be processed, may be produced from, for example, waste derived from degraded vehicles or electronic devices, scrap derived from end-of-life lithium ion batteries, or discarded batteries, such as defective products generated in the battery manufacturing process. An alloy can be used, which is obtained by subjecting such discarded batteries or the like to a pyrometallurgical process to reduce them through heating and melting.

Hereinafter, the alloy processing method will be described in more detail with reference to Examples where an alloy (containing nickel and/or cobalt and copper) obtained through melting discarded batteries of lithium ion batteries (hereinafter also referred to as "discarded lithium ion batteries") is a target to be processed.

FIG. 1 is a process diagram showing an example of a flow of the alloy processing method according to the present embodiment. This method includes: a leaching step S1 in which an acid solution is added to an alloy containing nickel and/or cobalt and copper (hereinafter, also simply referred to as an "alloy") in the presence of a sulfurizing agent to perform a leaching treatment and a leachate and a leaching residue are obtained; and a cementation step S2 in which a reducing agent and a sulfurizing agent are added to the obtained leachate and a copper-removal treatment is performed to sulfurize copper contained at least in the leachate to obtain a post-copper-removal solution and a copper-removed residue.

The method according to the present embodiment is characterized in that at least a part or all of the copper-removed residue obtained through the copper-removal treatment in the cementation step S2 is fed back to the leaching step S1 and the copper-removed residue is subjected to the leaching treatment together with the alloy.

Preferably, the copper-removed residue obtained through the copper-removal treatment in the cementation step S2 is separated and recovered and then formed into a slurry and the copper-removed residue in the form of the slurry is fed back to the leaching step within a predetermined time after the slurry formation.

Preferably, the copper-removed residue obtained through the copper-removal treatment in the cementation step S2 is formed into a slurry and the slurry of the copper-removed residue is fed back to the leaching step while maintaining the pH of the slurry of the copper-removed residue within a specific range.

Preferably, in the cementation step S2, the addition amount of the sulfurizing agent is set to less than 1 equivalent with respect to copper contained in the leachate.

### [Leaching Step]

### (Regarding Leaching Treatment)

In the leaching step S1, a leaching target is subjected to an acid leaching treatment to obtain a leachate. At this time, before or at the same time as the alloy is brought into contact with acid, the sulfurizing agent is added so that the leaching treatment is performed under a condition in which the sulfurizing agent is present. By such a leaching treatment, a leachate in which nickel and/or cobalt are dissolved and a leaching residue mainly containing copper sulfide are obtained.

Here, the "leaching target" to be subjected to the leaching treatment is an alloy containing nickel and/or cobalt and copper, which is a raw material to be processed. In addition, as will be described later in detail, a copper-removed residue obtained through the copper-removal treatment in the cementation step S2 is included. Note that in the first treatment, the leaching target is the alloy containing nickel and/or cobalt and copper.

Specifically, in the leaching treatment, the reactions represented by the following reaction formulae [1] and [2] occur by addition of an acid solution to the leaching target in the presence of a sulfurizing agent. The following reaction formulae show an example in which sulfuric acid is used as the acid and elemental sulfur is used as the sulfurizing agent. Cu-

Ni + S⁰ → CuS + NiO ··· [1]

NiO + H₂SO₄ + 1/20₂ → NiSO₄ + H₂O ··· [2]

In the leaching treatment, as shown in the above reaction formulae, a sulfuric acid solution (leachate) of nickel and/or cobalt and a leaching residue mainly composed of copper sulfide are produced. In the method according to the present embodiment, the alloy is subjected to the leaching treatment with acid in the presence of a sulfurizing agent as described above, whereby copper leached from the alloy is precipitated as copper sulfide and can be separated as a leaching residue. The produced leaching residue can be drawn out of the system and used as a raw material for, for example, copper refining.

On the other hand, as described above, by subjecting the alloy to the leaching treatment using acid, nickel and/or cobalt can be leached and a leachate containing nickel and/or cobalt can be obtained.

Further, in the method according to the present embodiment, the copper-removed residue obtained through the copper-removal treatment in the cementation step S2 to be described later is fed back to the leaching step S1 so that the copper-removed residue is also subjected to the acid-based leaching treatment as the leaching target together with the alloy. As will be described later, a very small amount of the alloy containing nickel and/or cobalt and copper remains in the copper-removed residue, which is to be fed back to the leaching step through copper-removal treatment in the cementation step S2.

Therefore, by subjecting at least a part or all of the copper-removed residue to the leaching treatment in the leaching step S1, it is possible to suppress recovery loss of nickel and/or cobalt remaining in the copper-removed residue and to efficiently obtain a solution containing nickel and/or cobalt at a higher concentration.

Preferably, when the copper-removed residue is repeatedly supplied to the leaching step S1, the copper-removed residue is formed into a slurry and the slurry is fed back to the leaching step S1 within a specific time after the slurry formation, specifically within 1.5 hours.

As described above, the alloy containing nickel and/or cobalt and copper remains in a very small portion of the copper-removed residue and the nickel and/or cobalt can be effectively leached from the remaining alloy by forming the copper-removed residue into a slurry and feeding it back to the leaching step S1. However, it has been found by research by the present inventors that if the time required until the copper-removed residue is subjected to the leaching treatment is too long, the leaching ratio of the nickel or cobalt decreases and the nickel and cobalt are incorporated in the leaching residue, resulting in loss. That is, in the feeding of the copper-removed residue to the leaching step S1, a relationship between the time of leaving the slurry containing the copper-removed residue and the leaching ratio was found. The reason for this is considered as follows: when the copper-removed residue is left in the liquid (slurry), nickel and/or cobalt in the alloy reacts with a sulfurizing agent (for example, elemental sulfur) added in the copper-removal treatment in the cementation step S2 to form a sulfide (NiS, CoS); leaching does not effectively proceed under the leaching conditions, where, for example, pH is set to about 1.

For this reason, it is preferable to control the time during which the copper-removed residue is left in the liquid to within a specific time. In other words, it is not preferable to leave the copper-removed residue in the liquid for a long time and is preferable to quickly feed it back to the leaching step S1 so that it is subjected to the leaching treatment. Specifically, the copper-removed residue is fed back to the leaching step S1 to be subjected to the leaching treatment within 1.5 hours from the slurry formation of the copper-removed residue. Thereby, it is possible to effectively suppress nickel and cobalt from converting into sulfides and to prevent the leaching efficiency of nickel and/or cobalt in the leaching step S1 from decreasing.

Further, when repeatedly supplying the copper-removed residue to the leaching step S1, it is preferable to adjust the pH of the slurry of the copper-removed residue to a specific range, specifically, to a pH of 3.0 or less, while feeding the copper-removed residue back to the leaching step.

When feeding the copper-removed residue back to the leaching step S1, it is preferable to form the copper-removed residue into a slurry, from the viewpoint of handling properties and the like. However, it has been found by research by the present inventors that when storage time after forming the copper-removed residue into a slurry is long, the pH of the slurry increases and nickel and cobalt react with an unreacted sulfurizing agent contained in the copper-removed residue to easily form sparingly soluble sulfides (NiS, CoS). As described above, these sulfides are not dissolved under the leaching conditions at a pH of 1.0 to 1.6 and as a result, nickel and cobalt are distributed to the resulting leaching residue, resulting in loss.

For this reason, preferably, after preparing a slurry of the copper-removed residue, the slurry is fed back to the leaching treatment while adjusting and maintaining the pH of the slurry to 3.0 or less. Thereby, it is possible to effectively suppress the generation of sulfides of nickel and cobalt, preventing a decrease in the leaching efficiency of nickel and/or cobalt in the leaching step S1.

### (Regarding Alloy)

The shape of the alloy to be processed is not particularly limited. Examples of the alloy to be processed include a plate-shaped alloy obtained by melting discarded lithium ion batteries to obtain an alloy and casting the alloy, a bar-shaped alloy obtained by drawing the alloy into a linear shape and cutting it appropriately, and a powdery alloy (hereinafter, the powdery alloy is also referred to as "alloy powder") and the shape thereof is not particularly limited.

In particular, as the alloy to be processed, alloy powder can be effectively and efficiently subjected to the leaching treatment.

When alloy powder is used, the particle diameter is preferably about 300 um or less. By using the alloy powder having such a particle size as the target to be processed, the leaching treatment can be more effectively performed. On the other hand, when the particle diameter of the alloy powder is too small, preparation of the alloy powder costs more and causes dust generation or ignition. Therefore, the particle diameter of the alloy powder is preferably approximately 10 um or more.

In the leaching treatment, the alloy to be processed is preferably subjected to preliminary washing with a thin acid solution in advance. Thereby, the activation treatment can be applied to the surface of the alloy to accelerate the leaching reaction.

### (Regarding Acid)

As the acid (acid solution) used in the leaching treatment, an acid such as sulfuric acid, hydrochloric acid, or nitric acid can be used. Among them, when an alloy obtained by melting discarded batteries (discarded LIBs) of lithium ion batteries (LIBs) is used as the alloy to realize a so-called "battery-to-battery", an ideal circulation method where discarded LIBs are recycled and supplied to the LIB raw material again, it is preferable to use an acid containing sulfuric acid as the acid. By using sulfuric acid as the acid, the leachate can be obtained in the form of sulfate which is easy to use for the positive electrode material of the LIBs.

As the acid, one type may be used alone, or a mixture of two or more types may be used. Further, a chloride may be contained in sulfuric acid and the obtained acid may be used as the acid.

The addition amount of the acid is not particularly limited, but is preferably 1 equivalent or more, more preferably 1.2 equivalent or more, with respect to the total amount of nickel and/or cobalt contained in the alloy to be processed and the copper-removed residue. By increasing the addition amount of acid, reaction rate can be increased and more efficient treatment can be performed. The upper limit of the addition amount of acid is preferably 11 equivalents or less.

Further, in the leaching treatment, the alloy and the acid may be supplied to an apparatus where a plurality of mixing sections, such as thickeners, are connected to each other, to be brought into stepwise contact with each other in countercurrent. For example, the alloy is supplied to the top mixing section of the apparatus, the acid is supplied to the bottom mixing section of the apparatus, and they are contacted stepwise in countercurrent.

### (Sulfurizing Agent)

As the sulfurizing agent to be added together with the acid so that the acid and the sulfurizing agent coexist in the alloy, a commonly known sulfurizing agent, such as sodium hydrosulfide or elemental sulfur, can be used. For example, in the case of a solid sulfurizing agent, it is preferable to appropriately pulverize it so that the reaction can proceed easily. The sulfurizing agent used for the leaching treatment in the leaching step S1 and the sulfurizing agent used for the copper-removal treatment in the cementation step S2 described later may be the same or different.

With respect to the amount of the sulfurizing agent, 1 equivalent thereof can be defined according to the reaction formula [1]. At this time, the amount of the sulfurizing agent is preferably 1 equivalent or more and 2 equivalents or less. If the amount of the sulfurizing agent is less than 1 equivalent, copper removal may be incomplete. On the other hand, even when an amount exceeding 2 equivalents is added, since the sulfurizing agent remains unreacted, there is an issue that a component to be separated as a solution such as nickel or cobalt is also converted to a sulfide, which is not recovered.

### (Regarding Treatment Conditions)

In the leaching treatment, it is preferable to measure pH and oxidation-reduction potential (ORP) of the obtained leachate and to monitor and control the measured pH and ORP.

As the metal, i.e., nickel or cobalt, is dissolved in acid by the leaching treatment and accordingly acid is consumed, the pH increases. Therefore, it is preferable to perform the treatment while appropriately adjusting the pH condition to a range in which the leaching reaction of the valuable metal is accelerated.

Specifically, the pH condition is not particularly limited, but the pH of the obtained leachate is preferably in the range of 0.8 or more and 1.6 or less and more preferably in the range of 1.0 or more and 1.6 or less. By performing the leaching treatment in such a range, the leaching can be accelerated and a situation where the deposited copper sulfide is excessively oxidized and redissolved can be more effectively suppressed.

The pH can be controlled by adjusting the addition amount of acid. As an indicator of the addition amount of acid to the reaction end point, about 1.2 equivalents with respect to the total amount of nickel and/or cobalt contained in the alloy is preferred.

The oxidation-reduction potential (ORP) is not particularly limited, but it is preferable to perform the leaching treatment while controlling the ORP to a range of 240 mV or more and 280 mV or less, as a value measured using a silver/silver chloride electrode as a reference electrode.

As a specific means for controlling the ORP, for example, a method of adding an oxidant can be mentioned. As the oxidant, conventionally known oxidants such as oxygen, air, hydrogen peroxide, and ozone gas can be used. For example, when a gaseous oxidant is used as the oxidant, the ORP of the leachate obtained in the leaching treatment can be controlled by bubbling the solution to adjust the supply amount (air supply amount). Specifically, when the ORP of the leachate increases too high, the ORP can be decreased by reducing the supply amount of the oxidant or ceasing the supply. Conversely, when the ORP of the leachate decreases to around the lower limit, the ORP can be increased by increasing the supply amount of the oxidant.

In this way, by performing the leaching treatment by controlling the ORP to, for example, the above-described range, it is possible to accelerate leaching of nickel and/or cobalt and also to suppress the deposited copper sulfide from being excessively oxidized and redissolved, resulting in more effective separation of copper from nickel and/or cobalt.

Since the ORP varies depending on pH and temperature, it is preferable to control ORP, pH and liquid temperature during the leaching treatment so that the appropriate range of each of the ORP, pH, and liquid temperature can be simultaneously maintained by simultaneously measuring the ORP, pH, and liquid temperature.

In the leaching treatment, it is preferable to determine appropriate ranges of the conditions, such as the reaction temperature, treatment time, and concentration of the slurry containing the alloy, by performing a preliminary test. In the leaching treatment, the leachate may be bubbled with air or the like so that the reaction uniformly proceeds. Further, in the leaching treatment, divalent copper ions may be added, whereby the divalent copper ions serve as a catalyst to accelerate the leaching reaction.

### [Cementation Step]

In the cementation step (also referred to as "copper-removal step" or "reduction step") S2, a reducing agent and a sulfurizing agent are added to the leachate obtained by the treatment in the leaching step S1 to perform a copper-removal treatment (cementation treatment) where copper contained at least in the leachate is sulfurized (reaction formula [3] below) to obtain a post-copper-removal solution (post-cementation solution) containing nickel and/or cobalt and a copper-removed residue (cementation residue) containing copper sulfide.

CuSO₄ + Ni-Cu + 2S⁰ → NiSO₄ + 2CuS [3]

In the leaching treatment in the leaching step S1, copper contained in the alloy and the copper-removed residue may be leached and dissolved into the leachate by acid together with nickel and/or cobalt and a part of the copper does not react with the sulfurizing agent and remains in the solution in some cases. Therefore, in the cementation step S2, a small amount of copper contained in the leachate is sulfurized (reduced) to form a copper-removed residue, in which copper is a precipitate in the form of copper sulfide, and a post-copper-removal solution (reduced solution) containing nickel and/or cobalt is solid-liquid separated.

In particular, for example, in a case where the leaching treatment is performed while controlling the ORP of the leachate to 280 mV or more during the leaching treatment, although the leaching ratio of nickel and/or cobalt is high, copper is simultaneously leached as well and thus copper is easily contained in the leachate. Similarly, in a case where the leaching treatment is performed while controlling the pH of the leachate to 1.6 or less, although the leaching ratio of nickel and/or cobalt is high, copper is simultaneously leached as well and thus copper is easily contained in the leachate. In this respect, by performing the copper-removal treatment on the leachate obtained through the leaching step S1, copper can be selectively separated while keeping the leaching ratio of nickel and/or cobalt high.

The reducing agent is not particularly limited and a solid or liquid reducing agent can be used. For example, a metal that is less noble than copper can be used as the solid reducing agent. Among them, it is preferable to use an alloy containing nickel and/or cobalt and to reduce copper by bringing the leachate into contact with the alloy serving as the reducing agent of the leachate.

When the alloy containing nickel and/or cobalt is used as the reducing agent, an alloy obtained by melting discarded batteries of lithium ion batteries (discarded lithium ion batteries) can be used in the same manner as in the target to be processed by the leaching treatment. Since this alloy processing method is originally directed to obtaining a solution containing nickel and/or cobalt, use of the alloy containing nickel and/or cobalt (for example, an alloy obtained by melting discarded lithium ion batteries) which is a recovery target, as the reducing agent, achieves an effect that the alloy having contributed to reduction is also leached.

That is, the leachate, that is, the target to be subjected to the copper-removal treatment in the cementation step S2, is an acid solution obtained by performing the leaching treatment with an acid such as sulfuric acid in the leaching step S1. Therefore, when an alloy containing nickel and/or cobalt is used as the reducing agent, the alloy acts as a reducing agent to fix copper contained in the leachate, whereas the alloy containing nickel and/or cobalt is leached by the leachate thereof, which is an acid solution, and the nickel and/or cobalt that constitute the alloy can be dissolved in the post-copper-removal solution (reduced solution).

By using the alloy as the reducing agent, it is unnecessary to separately prepare a reducing agent, which is industrially advantageous. Further, the amount of nickel and/or cobalt dissolved can be increased and a solution containing nickel and/or cobalt at a higher concentration can be obtained. The shape of the alloy is not particularly limited, and, for example, a powdery alloy can be used.

The amount (addition amount) of the alloy to be added as the reducing agent is not particularly limited, but is preferably in the range of 1.0 time or more and 2.0 times or less the equivalent required to sulfurize copper contained in the leachate to precipitate copper sulfide. The addition amount of the alloy is more preferably in the range of 1.5 times or more and 2.0 times or less the equivalent. The "equivalent" herein can be defined in accordance with the reaction represented by the reaction formula [3]. When the addition amount of the reducing agent is less than 1.0 times the equivalent, copper may not be completely removed. On the other hand, even if an amount exceeding 2.0 times the equivalent of the reducing agent is added, the reducing agent remains unreacted in the copper-removed residue. As described later, there is, thus, a possibility that load applied when the copper-removed residue is fed back to the leaching step S1 increases and this results in a negative cycle that the copper concentration of the leachate increases.

As the sulfurizing agent, generally known compounds such as sodium hydrosulfide and elemental sulfur can be used likewise to the sulfurizing agent used in the leaching treatment. The sulfurizing agent may be solid, liquid, or gaseous.

Herein, the amount (addition amount) of the sulfurizing agent to be added is preferably set to less than 1.0 equivalent with respect to copper contained in the leachate, the target of the copper-removal treatment. When the alloy containing nickel and/or cobalt is used as the reducing agent, the amount (addition amount) of the sulfurizing agent to be added is preferably set to less than 1.0 equivalent with respect to the total amount of copper contained in the leachate and the alloy used as the reducing agent.

The amount of the sulfurizing agent can be defined in accordance with the reaction formula [1], likewise to the amount of the sulfurizing agent to be added in the leaching treatment.

If an amount of the sulfurizing agent to be added in the copper-removal treatment is excessive, there is a possibility that the surplus sulfurizing agent not used for removing copper in the leachate or alloy and remaining unreacted causes a reaction to convert even components to be separated as a solution, such as nickel or cobalt, into sulfides, resulting in recovery loss of nickel or cobalt. Further, when the copper-removed residue obtained through the copper-removal treatment in the cementation step S2 is fed back to the leaching treatment in the leaching step S1, since nickel sulfide and cobalt sulfide generated by the unreacted sulfurizing agent are sparingly soluble compounds, it is necessary to set the pH to approximately 1 or lower in order to leach them with acid. At this time, there is, however, an issue that the acid is excessive and the leaching of copper contained in the alloy and the copper-removed residue is also accelerated.

Therefore, an amount of the sulfurizing agent to be added in the copper-removal treatment is preferably less than 1.0 equivalent with respect to copper contained in the leachate or in the leachate and the alloy used as the reducing agent. As described above, the addition amount of the sulfurizing agent is controlled to be less than 1.0 equivalent and copper contained in the leachate is subjected to a substitution reaction mainly with the reducing agent, in particular, the alloy containing nickel and/or cobalt. This makes it possible to perform the copper-removal treatment while suppressing formation of sparingly soluble nickel sulfide or cobalt sulfide.

As described above, the addition amount of the alloy as the reducing agent is preferably in a range of 1.0 times or more and 2.0 times or less, more preferably 1.5 times or more and 2.0 times or less, with respect to the equivalent required to sulfurize copper contained in the leachate and precipitate it as copper sulfide.

According to such a method, it is possible to prevent nickel and cobalt from being sulfurized by the sulfurizing agent to cause recovery loss, to promote separation between nickel and cobalt from copper, and to obtain a solution containing nickel and/or cobalt more efficiently.

The lower limit of the addition amount of the sulfurizing agent is not particularly limited, but is preferably 0.5 equivalents or more and more preferably 0.7 equivalents or more, with respect to copper contained in the leachate or in the leachate and the alloy used as the reducing agent.

In the copper-removal treatment, it is preferable to monitor the oxidation-reduction potential (ORP) and pH and appropriately control the addition amount of the reducing agent. For example, it is preferable to perform the treatment so that the pH of the post-copper-removal solution obtained by the copper-removal treatment is maintained at 1.6 or less as the leachate. In the copper-removal treatment, the indication of the end point at which copper is removed can be managed by measuring ORP. For example, a point where ORP reaches 0 mV or less, as a value measured using a silver/silver chloride electrode as a reference electrode, can be used as an indicator of the end point.

In the copper-removal treatment, it is preferable to perform the treatment by controlling the temperature of the solution to 50°C or higher.

Herein, by performing the copper-removal treatment as described above, a slurry containing a post-copper-removal solution containing nickel and/or cobalt and a copper-removed residue containing copper sulfide can be obtained and by solid-liquid separation of the slurry, a post-copper-removal solution from which copper has been separated, that is, a solution containing nickel and/or cobalt, can be recovered. The recovered post-copper-removal solution can be purified by removing impurities such as iron by, for example, subjecting it to an iron removal step (oxidative neutralization step).

On the other hand, the alloy containing nickel and/or cobalt and copper remains in a very small portion of the copper-removed residue obtained by solid-liquid separation. The alloy remaining in the copper-removed residue is derived from, for example, the alloy (alloy containing nickel and/or cobalt and copper) added as the reducing agent in the copper-removal treatment in the cementation step S2. Alternatively, it is derived from the alloy which is a raw material to be processed subjected to the leaching treatment and which remains unreacted in the leaching treatment.

Thus, in the method according to the present embodiment, at least a part or all of the copper-removed residue obtained through the copper-removal treatment in the cementation step S2 is fed back to the leaching step S1 to be is subjected to the leaching treatment together with the alloy as a fresh raw material to be processed.

According to the above-described method, recovery loss of nickel and/or cobalt contained in the alloy remaining in the copper-removed residue can be effectively prevented and a solution containing nickel and/or cobalt at a high concentration can be more efficiently obtained.

When the copper-removed residue obtained through the copper-removal treatment is fed back to the leaching step S1, it is preferable to form the copper-removed residue, which has been separated and recovered from the post-copper-removal solution, into a slurry. When separating the post-copper-removal solution and the copper-removed residue obtained through the copper-removal treatment in the cementation step S2, it is unavoidable that some moisture and acid components adhere to the copper-removed residue. When feeding the copper-removed residue back to the leaching step S1, it is efficient to form the copper-removed residue into a slurry from the viewpoint of industrial handling. Therefore, although there is some difference, it is preferable to supply the copper-removed residue to the leaching step S1, in the form of slurry.

At this time, when the storage (leaving) time until the slurry is subjected to the treatment in the leaching step S1 is prolonged, unreacted metal is eluted from the copper-removed residue in the slurry due to contact with acid; hence the pH of the slurry gradually increases.

On the other hand, as described above, it is preferable to perform leaching in the leaching step S1 in the pH range of 1.0 to 1.6, from the viewpoint of effectively leaching nickel and cobalt and preventing copper from being leached as much as possible.

The present inventors have found that nickel sulfide (NiS) and cobalt sulfide (CoS) are easily produced when the pH exceeds about 3. In other words, when forming the copper-removed residue into a slurry and storing it for a prolonged time, the pH increases and nickel and/or cobalt reacts with the unreacted sulfurizing agent contained in the copper-removed residue and easily produces sparingly soluble nickel sulfide or cobalt sulfide. These sulfides are not dissolved under leaching conditions at a pH of 1.0 to 1.6; as a result, nickel and cobalt are distributed to the resulting leaching residue, resulting in loss.

Therefore, when feeding the copper-removed residue separated and recovered back to the leaching step S1, it is preferable to supply the slurry to the leaching treatment within a specific time after the slurry formation of the copper-removed residue. Specifically, it is preferable to feed the slurry back to the leaching step S1 within 1.5 hours from the slurry formation of the copper-removed residue.

As described above, by feeding the copper-removed residue to the leaching step S1 within a specific time period, it is possible to suppress the formation of sulfides of nickel and cobalt in the copper-removed residue. Thereby, it is possible to effectively prevent a decrease in the leaching efficiency of nickel and/or cobalt in the leaching step S1 and, as a result, a decrease in the recovery rate of nickel and cobalt, enabling a solution containing nickel and/or cobalt at a higher concentration to be obtained more efficiently.

Preferably, the pH of the slurry of the copper-removed residue is maintained at 3.0 or less until the copper-removed residue is fed back to the leaching step S1. That is, it is preferable that the copper-removed residue obtained by the copper-removal treatment is formed into a slurry and then the slurry is fed back to the leaching step S1 while maintaining the pH of the slurry at 3.0 or lower.

As described above, by forming the copper-removed residue into a slurry and then feeding the slurry back to the leaching step S1 to subject the copper-removed residue to the leaching treatment while maintaining the pH of the slurry at 3.0 or less, it is possible to suppress the sulfurizing agent remaining unreacted in the copper-removal treatment from converting nickel and cobalt into sulfides in the slurry of the copper-removed residue. It is possible to effectively prevent nickel and/or cobalt from not being leached in the leaching step S1, resulting in recovery loss.

Furthermore, it is more preferable, as described above, to suppress the addition amount of the sulfurizing agent in the copper-removal treatment in the cementation step S2 to an amount less than the reaction equivalent, i.e., less than 1.0 equivalent with respect to the total of copper contained in the leachate and copper contained in an alloy when the alloy is used as the reducing agent. Thereby, it is possible to suppress the unreacted sulfurizing agent in the copper-removed residue from remaining and more effectively prevent conversion of nickel or cobalt to sulfides.

### EXAMPLES

Hereinafter, Examples of the present invention will be described in more detail, but the present invention is not limited to the following Examples.

### [Example 1]

### (Leaching Step)

Discarded lithium ion batteries (discarded LIBs) were subjected to oxidative roasting in which the batteries were heated under an oxidizing atmosphere; then a pyrometallurgical process was performed by adding a reducing agent to the obtained oxidatively roasted product and heating and melting the oxidatively roasted product to reduce. The molten alloy obtained by the reductive melting was solidified to obtain powdery alloy powder having a particle diameter of 300 um or less. The obtained alloy powder was used as the alloy to be processed (alloy containing nickel, cobalt and copper). Table 1 below shows the composition of the alloy powder analyzed using an ICP analyzer.

**[Table 1]**

| | Grade (% by mass) | | | |
|---|---|---|---|---|
| | Ni | Co | Cu | Fe |
| Alloy | 24 | 12 | 63 | 1.5 |

The alloy powder having the composition shown in Table 1 was formed into a slurry having a slurry concentration of 300 g/L and sulfur was added so as to be present in an amount of 1.25 equivalents to copper contained in the alloy powder. Then, a sulfuric acid solution was added to carry out the leaching treatment. The liquid temperature was set to 60°C. After the leaching treatment, the obtained slurry was solid-liquid separated by filtration and the filtrate (leachate) was analyzed by an ICP analyzer to measure the concentration of each element component.

As a result of elemental analysis, the leaching ratios of nickel (Ni) and cobalt (Co) were both 99%. Incidentally, copper was mostly distributed to the leaching residue but, as shown in Table 2 below, copper was contained in the leachate at a concentration of 5 g/L. From this, it is understood that the separation of copper was insufficient only by directly leaching the alloy.

**[Table 2]**

| | Concentration (g/L) | | | |
|---|---|---|---|---|
| | Ni | Co | Cu | Fe |
| Leachate | 80 | 40 | 5 | 5 |

### (Cementation Step)

Next, the alloy powder (particle diameter: 1 um to 300 µm) shown in the above Table 1 was used as the reducing agent to the leachate showing the composition shown in Table 2 above and was added so that the slurry concentration was 300 g/L. Further, sulfur as the sulfurizing agent was added in an amount of 1 equivalent to the total of copper contained in the alloy powder and the leachate; thereby the copper-removal treatment (reducing treatment) was performed on the leachate.

The solution temperature was set to 60°C and the oxidation-reduction potential (ORP, reference electrode: Ag/AgCl) was lowered to 0 mV or less. After the copper-removal treatment, the obtained slurry was solid-liquid separated by filtration and the post-copper-removal solution (reduced solution) was analyzed by an ICP analyzer to measure the concentration of each element component.

As a result of elemental analysis, a sulfuric acid solution mainly containing copper-removed nickel and cobalt was obtained as shown in Table 3 below.

**[Table 3]**

| | Concentration (g/L) | | | |
|---|---|---|---|---|
| | Ni | Co | Cu | Fe |
| Post-copper-removal solution | 80 | 43 | <0.01 | 5 |

### (Leaching of Cementation Residue)

Water was added to the copper-removed residue obtained in the cementation step and a slurry of the copper-removed residue was prepared such that the slurry concentration was 300 g/L. The pH was adjusted to 1 using sulfuric acid. Then, the slurry of the copper-removed residue was fed back to the leaching step at a liquid temperature of 60°C and the slurry was subjected to the leaching treatment together with the alloy.

As a result, as shown in Table 4 below, 80% (leaching ratio: 80%) of nickel and 87% (leaching ratio: 87%) of cobalt could leached, provided that the nickel and cobalt were those contained in the alloy that remained in the copper-removed residue and that was repeatedly supplied to the leaching step. Recovery loss could be effectively reduced.

**[Table 4]**

| | Leaching ratio(%) | |
|---|---|---|
| | Ni | Co |
| Leaching ratio | 80 | 43 |

### [Example 2]

### (Leaching Step)

In the same manner as in Example 1, the leaching treatment was performed using the alloy powder having the composition shown in Table 1 above. In other words, the alloy powder was formed into a slurry having a slurry concentration of 300 g/L and sulfur was added so as to be present in an amount of 1.25 equivalents to the copper contained in the alloy powder. Then, a sulfuric acid solution was added to carry out the leaching treatment. The liquid temperature was set to 60°C. After the leaching treatment, the obtained slurry was solid-liquid separated by filtration and the filtrate (leachate) was analyzed by an ICP analyzer to measure the concentration of each element component.

As a result of elemental analysis, the leaching ratios of nickel (Ni) and cobalt (Co) were both 99%. Incidentally, copper was mostly distributed to the leaching residue, but as shown in Table 5 below, copper was contained in the leachate at a concentration of 3 g/L. From this, it is understood that the separation of copper was insufficient only by directly leaching the alloy.

**[Table 5]**

| | Concentration (g/L) | | | |
|---|---|---|---|---|
| | Ni | Co | Cu | Fe |
| Leachate | 81 | 40 | 3 | 5 |

### (Cementation Step)

Next, the alloy powder (particle diameter: 1 um to 300 µm) shown in the above Table 5 was used as the reducing agent to the leachate showing the composition shown in the above Table 5 and was added so that the slurry concentration was 300 g/L. Further, sulfur as the sulfurizing agent was added in an amount of 1 equivalent to the total of copper contained in the alloy powder and the leachate; thereby the copper-removal treatment (reducing treatment) was performed on the leachate.

The solution temperature was set to 60°C and the oxidation-reduction potential (ORP, reference electrode: Ag/AgCl) was lowered to 0 mV or less. After the copper-removal treatment, the obtained slurry was solid-liquid separated by filtration and the post-copper-removal solution (reduced solution) was analyzed by an ICP analyzer to measure the concentration of each element component.

As a result of elemental analysis, a sulfuric acid solution mainly containing copper-removed nickel and cobalt was obtained as shown in Table 6 below.

**[Table 6]**

| | Concentration (g/L) | | | |
|---|---|---|---|---|
| | Ni | Co | Cu | Fe |
| Post-copper-removal solution | 86 | 43 | <0.01 | 5 |

### (Leaching of Cementation Residue)

Water was added to the copper-removed residue obtained in the cementation step, a slurry of the copper-removed residue was prepared such that the slurry concentration was 300 g/L, and the slurry was left for 1.5 hours as it was. Then, the pH was adjusted to 1 using sulfuric acid and the adjusted slurry was fed back to the leaching step at a liquid temperature of 60°C and subjected to the leaching treatment together with the alloy. In other words, the copper-removed residue separated and collected was fed back to the leaching step at 1.5 hours after the slurry formation and subjected to the leaching treatment.

As a result, as shown in Table 7 below, 91% (leaching ratio 91%) of nickel and 91% (leaching ratio 91%) of cobalt could be leached, provided that the nickel and cobalt were those contained in the alloy that remained in the copper-removed residue and that was fed back to the leaching step. Recovery loss could be effectively reduced.

### [Reference Example 1]

The alloy was treated in the same manner as in Example 2. However, when feeding the copper-removed residue obtained from the cementation step back to the leaching step, water was added to the copper-removed residue to form a slurry, the slurry was left as it was for 168 hours, then sulfuric acid was added to adjust the pH to 1, and the adjusted solution was fed back to the leaching step at a liquid temperature of 60°C to be subjected to the leaching treatment together with the alloy. That is, the separated and recovered copper-removed residue was fed back to the leaching step at 168 hours after the slurry formation and was subjected to the leaching treatment.

As a result, the nickel leaching ratio was only 80% and the cobalt leaching ratio was only 87% and the results were inferior to those of Example 2.

Table 7 below summarizes the results of leaching ratios of Example 2 and Reference Example 1. As described above, it was found that when the copper-removed residue obtained from the cementation step was fed back to the leaching step and subjected to the leaching treatment, the leaching ratios of nickel or cobalt could be improved by controlling the time for which the copper-removed residue was left to a specific time and performing the leaching treatment quickly.

**[Table 7]**

| | Leaching ratio(%) | |
|---|---|---|
| | Ni | Co |
| Example 2 (Leaching ratio after leaving for 1.5 h) | 91 | 91 |
| Reference Example 1 (Leaching ratio after leaving for 168 h) | 80 | 87 |

### [Example 3]

### (Leaching Step)

In the same manner as in Example 1, the leaching treatment was performed using the alloy powder having the composition shown in Table 1 above. In other words, the alloy powder was formed into a slurry having a slurry concentration of 300 g/L and sulfur was added to be present in an amount of 1.25 equivalents to the copper contained in the alloy powder. Then, a sulfuric acid solution was added to carry out the leaching treatment. The liquid temperature was set to 60°C. After the leaching treatment, the obtained slurry was solid-liquid separated by filtration and the filtrate (leachate) was analyzed by an ICP analyzer to measure the concentration of each element component.

As a result of elemental analysis, the leaching ratios of nickel (Ni) and cobalt (Co) were both 99%. Incidentally, copper was mostly distributed to the leaching residue but, as shown in Table 8 below, copper was contained in the leachate at a concentration of 3 g/L. From this, it is understood that the separation of copper was insufficient only by directly leaching the alloy.

**[Table 8]**

| | Concentration (g/L) | | | |
|---|---|---|---|---|
| | Ni | Co | Cu | Fe |
| Leachate | 81 | 40 | 3 | 5 |

### (Cementation Step)

Next, the alloy powder (particle diameter: 1 um to 300 µm) shown in the above Table 1 was used as the reducing agent to the leachate showing the composition shown in Table 8 above and was added so that the slurry concentration was 300 g/L. Further, sulfur as the sulfurizing agent was added in an amount of 1 equivalent to the total of copper contained in the alloy powder and the leachate and thereby the copper-removal treatment (reducing treatment) was performed on the leachate.

The solution temperature was set to 60°C and the oxidation-reduction potential (ORP, reference electrode: Ag/AgCl) was lowered to 0 mV or less. After the copper-removal treatment, the obtained slurry was solid-liquid separated by filtration and the post-copper-removal solution (reduced solution) was analyzed by an ICP analyzer to measure the concentration of each element component.

As a result of elemental analysis, a sulfuric acid solution mainly containing copper-removed nickel and cobalt was obtained as shown in Table 9 below.

**[Table 9]**

| | Concentration (g/L) | | | |
|---|---|---|---|---|
| | Ni | Co | Cu | Fe |
| Post-copper-removal solution | 87 | 43 | <0.01 | 5 |

### (Leaching of Cementation Residue)

Water was added to the copper-removed residue obtained in the cementation step and a slurry of the copper-removed residue was prepared such that the slurry concentration was 300 g/L. The pH was adjusted to and maintained at 3 or less using sulfuric acid. Incidentally, the standing time was set to 1.5 hours. Then, the slurry of the copper-removed residue was fed back to the leaching step at a liquid temperature of 60°C and subjected to the leaching treatment under the same conditions as the above-described treatment conditions together with the alloy, while maintaining the pH at 3 or less.

As a result, as shown in Table 10 below, 96% (leaching ratio: 96%) of nickel and 96% (leaching ratio: 96%) of cobalt could be leached, provided that the nickel and cobalt were those contained the alloy that remained in the copper-removed residue and that was fed back to the leaching step. Recovery loss could be effectively reduced.

**[Table 10]**

| | Ni | Co |
|---|---|---|
| Leaching ratio (%) | 96 | 96 |

### [Reference Example 2]

The alloy was treated in the same manner as in Example 3. In the cementation step, sulfur as the sulfurizing agent was added in an amount of 1 equivalent to the total of copper contained in the alloy powder added as the reducing agent and copper in the leachate and thereby the leachate was subjected to the copper-removal treatment (reducing treatment).

Subsequently, water was added to the copper-removed residue obtained by the copper-removal treatment in the cementation step and a slurry of the copper-removed residue was prepared such that the slurry concentration was 300 g/L. Then, the slurry of the copper-removed residue was fed back to the leaching step at a liquid temperature of 60°C. However, when the slurry of the copper-removed residue was fed back to the leaching step, the pH was not adjusted or maintained and the standing time was set to 3 hours.

As a result, 80% of nickel (leaching ratio: 80%) and 87% of cobalt (leaching ratio: 87%) could be leached, provided that the nickel and cobalt were those contained in the alloy that remained in the copper-removed residue and that was fed back to the leaching step. The leaching ratios were, however, lower than those in Example 3. The reason for this is considered as follows; in Reference Example 2, since the pH of the slurry of the copper-removed residue was not adjusted or maintained when the slurry of the copper-removed residue was fed back to the leaching step, the pH of the slurry gradually increased with time and nickel and cobalt reacted with the unreacted sulfurizing agent contained in the copper-removed residue to form sulfides of nickel and cobalt.

### [Example 4]

### (Leaching Step)

In the same manner as in Example 1, the leaching treatment was performed using the alloy powder having the composition shown in Table 1 above. In other words, the alloy powder was formed into a slurry having a slurry concentration of 300 g/L and sulfur was added to be present in an amount of 1.25 equivalents to the copper contained in the alloy powder. Then, a sulfuric acid solution was added to carry out the leaching treatment. The liquid temperature was set to 60°C. After the leaching treatment, the obtained slurry was solid-liquid separated by filtration and the filtrate (leachate) was analyzed by an ICP analyzer to measure the concentration of each element component.

As a result of elemental analysis, the leaching ratios of nickel (Ni) and cobalt (Co) were both 99%. Incidentally, copper was mostly distributed to the leaching residue but, as shown in Table 11 below, copper was contained in the leachate at a concentration of 3 g/L. From this, it is understood that the separation of copper was insufficient only by directly leaching the alloy.

**[Table 11]**

| | Concentration (g/L) | | | |
|---|---|---|---|---|
| | Ni | Co | Cu | Fe |
| Leachate | 81 | 40 | 3 | 5 |

### (Cementation Step)

Next, the alloy powder (particle diameter: 1 um to 300 µm) shown in the above Table 1 was used as the reducing agent to the leachate showing the composition shown in the above Table 11 and was added so that the slurry concentration was 300 g/L.
Further, sulfur as the sulfurizing agent was added in an amount of 0.75 equivalents to the total of copper contained in the alloy powder and the leachate and thereby the copper-removal treatment (reducing treatment) was performed on the leachate.

The solution temperature was set to 60°C and the oxidation-reduction potential (ORP, reference electrode: Ag/AgCl) was lowered to 0 mV or less. After the copper-removal treatment, the obtained slurry was solid-liquid separated by filtration and the post-copper-removal solution (reduced solution) was analyzed by an ICP analyzer to measure the concentration of each element component.

As a result of elemental analysis, a sulfuric acid solution mainly containing copper-removed nickel and cobalt was obtained as shown in Table 12 below.

**[Table 12]**

| | Concentration (g/L) | | | |
|---|---|---|---|---|
| | Ni | Co | Cu | Fe |
| Post-copper-removal solution | 87 | 43 | <0.01 | 5 |

### (Leaching of Cementation Residue)

Water was added to the copper-removed residue obtained in the cementation step and a slurry of the copper-removed residue was prepared such that the slurry concentration was 300 g/L. The pH was adjusted to 1 using sulfuric acid. The slurry of the copper-removed residue was fed back to the leaching step at a liquid temperature of 60°C and subjected to the leaching treatment together with the alloy.

As a result, as shown in Table 13 below, 98% of nickel (leaching ratio 98%) and 98% of cobalt (leaching ratio 98%) could be leached, provided that the nickel and cobalt were those contained in the alloy supplied. Recovery loss could be effectively reduced.

**[Table 13]**

| | Ni | Co |
|---|---|---|
| Leaching ratio (%) | 98 | 98 |

### [Reference Example 3]

The alloy was treated in the same manner as in Example 4. However, in the cementation step, sulfur as the sulfurizing agent was added in an amount of 1 equivalent to the total of copper contained in the alloy powder and copper in the leachate and thereby the leachate was subjected to the copper-removal treatment (reducing treatment).

Subsequently, water was added to the copper-removed residue obtained by the copper-removal treatment in the cementation step and a slurry of the copper-removed residue was prepared such that the slurry concentration was 300 g/L. The pH was adjusted to 1 using sulfuric acid. Then, the slurry of the copper-removed residue was fed back to the leaching step at a liquid temperature of 60°C and subjected to the leaching treatment together with the alloy.

As a result, 80% (leaching ratio: 80%) of nickel contained in the alloy supplied and 87% (leaching ratio: 87%) of cobalt contained in the alloy supplied could be leached but the leaching ratios were lower than those in Example 4. The reason for this is considered as follows; in Reference Example 3, since the addition amount of sulfur (sulfurizing agent) in the copper-removal treatment was excessive, sulfides of nickel and cobalt were generated by the unreacted sulfur.

## Claims

1. An alloy processing method for obtaining a solution containing nickel and/or cobalt from an alloy containing nickel and/or cobalt and copper, the method comprising:
a leaching step of performing a leaching treatment by adding an acid solution to the alloy in a presence of a sulfurizing agent to obtain a leachate and a leaching residue; and
a cementation step of performing a copper-removal treatment by adding a reducing agent and a sulfurizing agent to the leachate obtained in the leaching step to sulfurize copper contained at least in the leachate to obtain a post-copper-removal solution and a copper-removed residue;
wherein the copper-removed residue obtained through the copper-removal treatment in the cementation step is fed back to the leaching step to subject the copper-removed residue to the leaching treatment together with the alloy.

2. The alloy processing method according to claim 1,
wherein the copper-removed residue obtained through the copper-removal treatment in the cementation step is separated and recovered and formed into a slurry and the slurry is fed back to the leaching step within 1.5 hours from the slurry formation to subject the copper-removed residue to the leaching treatment together with the alloy.

3. The alloy processing method according to claim 1,
wherein the copper-removed residue obtained through the copper-removal treatment in the cementation step is formed into a slurry and fed back to the leaching step to subject the copper-removed residue to the leaching treatment together with the alloy, while maintaining the pH of the slurry of the copper-removed residue at 3 or less.

4. The alloy processing method according to any one of claims 1 to 3,
wherein, in the cementation step, an addition amount of the sulfurizing agent is set to less than 1 equivalent with respect to copper contained in the leachate.

5. The alloy processing method according to claim 1,
wherein, in the cementation step, the alloy containing nickel and/or cobalt and copper is used as the reducing agent.

6. The alloy processing method according to claim 5,
wherein the alloy remains in the copper-removed residue to be fed back to the leaching step.

7. The alloy processing method according to claim 5,
wherein, in the cementation step, the addition amount of the sulfurizing agent is set to less than 1 equivalent with respect to copper contained in the leachate and the alloy to be used as the reducing agent.

8. The alloy processing method according to claim 5,
wherein an amount of the alloy added as the reducing agent in the cementation step is in the range of 1.0 times or more and 2.0 times or less an equivalent required to sulfurize copper contained in the leachate to precipitate as copper sulfide.

9. The alloy processing method according to claim 1,
wherein the alloy includes an alloy obtained by melting a discarded battery of a lithium ion battery.
